# EUROPEAN PATENT SPECIFICATION

(11) **EP 2 837 292 B1**
(45) Date of publication and mention of the grant of the patent: **18.10.2017**
(21) Application number: 13775024.6
(22) Date of filing: 10.04.2013
(51) Int. Cl.: A23C 9/123, A23C 9/13, A23L 33/10, A23L 33/135

(54) **SYNBIOTIC FOOD COMPOSITION CONTAINING TAGATOSE AND PROBIOTIC LACTIC ACID BACTERIA**
SYMBIOTISCHE NAHRUNGSMITTELZUSAMMENSETZUNG MIT TAGATOSE UND PROBIOTISCHEN MILCHSÄUREBAKTERIEN
COMPOSITION ALIMENTAIRE SYNBIOTIQUE CONTENANT DU TAGATOSE ET DES BACTÉRIES D'ACIDE LACTIQUE PROBIOTIQUES

(30) Priority: 10.04.2012 KR 20120037424
(43) Date of publication of application: 18.02.2015
(73) Proprietor: CJ CheilJedang Corporation, Jung-gu Seoul 100-749 (KR)
(72) Inventor: KOH, Ji Hoon, Seoul 121-799 (KR); KIM, Young Jae, Seoul 151-772 (KR); PARK, Seung Won, Yongin-si,Gyeonggi-do 446-727 (KR)
(74) Representative: Marro, Nicolas
(86) International application number: PCT/KR2013/002982
(87) International publication number: WO 2013/154343

(56) References cited:
- WO-A1-99/29833
- WO-A1-03/041512
- WO-A1-2006/054135
- WO-A2-2007/081981
- DE-T2- 69 506 002
- Anonymous: "Citrus Drinking Yogurt- Record ID 1778650", GNPD, 1 April 2012 (2012-04-01), pages 1-3, XP055224684, Retrieved from the Internet: URL:http://www.gnpd.com/sinatra/recordpage /1778650/from_search/Ghs8iIeYGW/ [retrieved on 2015-10-30]
- Anonymous: "Optimized Superfood Meal Replacement Record ID 10237526", GNPD, 1 October 2005 (2005-10-01), pages 1-4, XP055224685, Retrieved from the Internet: URL:http://www.gnpd.com/sinatra/recordpage /10237526/from_search/Ghs8iIeYGW/ [retrieved on 2015-10-30]
- Anonymous: "Therapeutic Sugar - Record ID 10232286", GNPD, 1 September 2005 (2005-09-01), pages 1-2, XP055224837, Retrieved from the Internet: URL:http://www.gnpd.com/sinatra/recordpage /10232286/from_search/Ghs8iIeYGW/ [retrieved on 2015-10-30]
- Hans Bertelsen ET AL: "Fermentation of D-Tagatose by Human Intestinal Bacteria and Dairy Lactic Acid Bacteria INTRODUCTION", Microbial Ecology in Health and Disease, 1 January 2001 (2001-01-01), pages 87-95, XP055224693, Retrieved from the Internet: URL:http://www.microbecolhealthdis.net/ind ex.php/mehd/article/view/8006 [retrieved on 2015-11-30]
- KOH JI HOON ET AL: "Synbiotic impact of tagatose on viability ofLactobacillus rhamnosusstrain GG mediated by the phosphotransferase system (PTS)", FOOD MICROBIOLOGY, ACADEMIC PRESS LTD, LONDON, GB, vol. 36, no. 1, 28 March 2013 (2013-03-28) , pages 7-13, XP028562714, ISSN: 0740-0020, DOI: 10.1016/J.FM.2013.03.003

## Description

### Technical Field

The present invention relates to a synbiotic food composition, which is a food composition for promoting the active intestinal growth of *Lactob*acillus sp. lactic acid bacterium, containing lactic acid bacteria and tagatose as a source of nutrients for the bacteria strain.

More particularly, the present invention relates to a synbiotic food composition containing a *Lactobacillus casei* strain or *Lactobacillus rhamnosus* strain as a probiotic, and tagatose as a prebiotic.

### Background Art

The term "probiotics" means live microorganisms having a beneficial effect on the health of hosts such as humans, animals, or the like, or a component thereof, and it has been known that the probiotics provide a beneficial effect, for example, maintenance of a balance in intestinal microflora, to the host taking the probiotics.

Generally, the probiotics include beneficial bacteria such as lactic acid bacteria and *Bifidobacteria* and a range of yeasts. Among them, lactic acid bacteria belonging to the genera *Lactobacillus, Lactococcus, Bifidobacteria, Streptococcus,* and the like, have been mainly studied and used.

The lactic acid bacteria (LAB) have been used as generally recognized as safe (GRAS) to produce various fermented food for a long period of time. The lactic acid bacteria use various sugars including lactose as a substrate to convert the sugar into lactic acid, and suppress growth of harmful bacteria by imparting a sour taste to food and lowering a pH through the process as described above. Since the lactic acid bacteria have beneficial effects on humans in various aspects, for example, effects of controlling the intestinal microflora of a host to suppress various intestinal diseases and promote immunity as well as an antibiotic effect, the interest in the development of lactic acid bacteria as well as various food materials has been growing.

As described above, the lactic acid bacteria, which are representative probiotics, have been widely utilized in human life, for example, various fermented food, fermented soybeans, medicines, feed additive for livestock, and the like, as well as fermented milk products. Recently, research emphasizing various health functional effects of lactic acid bacteria in the intestine of the host in addition to nutritional effects thereof has been conducted.

In order to increase in vivo activities of the lactic acid bacteria as described above, research into synbiotics obtained by mixing probiotics corresponding to living bacteria and prebiotics corresponding to a source of nutrients for the probiotics has been conducted. However, prebiotics used in the synbiotics according to the related art were significantly digested in the digestive organ of a host, such that the prebiotics did not efficiently act as the source of nutrients of the probiotics, and species specificity of the prebiotics is insufficient, such that the prebiotics were not efficient to increase an activity of a specific lactic acid bacterium.

Meanwhile, tagatose, which is an isomer of fructose, is a naturally produced low-calorie natural sugar. Tagatose has a sweet taste similar to sugar, and a sweetness degree thereof is about 92% of sugar, but a calorie thereof is only about 38% of sugar and a glycemic index (GI) thereof is only about 4% of sugar, such that tagatose has been spotlighted as a sugar substitute sweetener.

In addition, a possibility that tagatose can be used as prebiotics has been disclosed in Korean Patent No. 10-0620477, but there was almost no research into detailed application plans such as a range of the probiotics to which tagatose may be actually applied, and the like.

DE 695 06 002 T2 discloses the ability of *Lactobacillus pracasei* DN114001 to ferment tagatose and Hans Bertelsen et al. ("Fermentation of D-tagatose by Human Intestinal Bacteria and Dairy Lactic Acid Bacteria INTRODUCTION", Microbial Ecology in Health and Disease, 1 January 2001, pages 87-95) discloses the ability of *Lactobacillus casei* and *Latobacillus rhamnosus* to ferment tagatose. However these two disclosures are silent on *Lactobacillus casei shirota* and *Lactobacillus casei*-01®.

### Technical Problem

The present invention provides a food composition providing synbiotics containing tagatose as a prebiotic and a specific *Lactobacillus* sp. lactic acid bacterium specifically using tagatose as a probiotic to thereby assist in dominant proliferation of the specific lactic acid bacterium in the intestine of a host eating the food composition.

### Technical Solution

The present description relates to a synbiotic food composition, which is a food composition for promoting active intestinal growth of *Lactobacillus sp.* lactic acid bacterium, containing lactic acid bacteria and tagatose as a source of nutrients for the bacteria strain.

According to a first aspect of the present invention, there is provided a food composition comprising tagatose and *Lactobacillus casei, wherein* the *Lactobacillus casei* is one or more selected from a group consisting of *Lactobacillus casei* Shirota and *Lactobacillus casei*-01®.

According to an exemplary embodiment of the first aspect of the present invention, based on 100 parts by weight of the composition, the food composition may contain more than 0 to 20 parts by weight of tagatose; and more than 0 to 1 part by weight of *Lactobacillus casei.*

According to another exemplary embodiment of the first aspect of the present invention, there is provided a fermented milk composition containing: based on 100 parts by weight of the entire composition,
more than 0 to 20 parts by weight of tagatose;
more than 0 to 1 part by weight of *Lactobacillus casei;*
more than 0 to 10 parts by weight of skim milk powder; and 50 to 99 parts by weight of purified water.

According to a second aspect of the present invention, there is provided a food composition comprising tagatose and *Lactobacillus rhamnosus GG, wherein* based on 100 parts by weight of the composition, it contains more than 0 to 20 parts by weight of tagatose; and more than 0 to 1 part by weight of *Lactobacillus rhamnosus GG.*

According to an exemplary embodiment of the second aspect of present invention, there is provided a concentrated fermented milk composition containing: based on 100 parts by weight of the entire composition,
more than 0 to 20 parts by weight of tagatose;
more than 0 to 1 part by weight of *Lactobacillus rhamnosus;* 50 to 99 parts by weight of raw milk;
more than 0 to 1 part by weight of pectin; and
more than 0 to 50 parts by weight of purified water.

### Advantageous Effects

The present invention may provide synbiotics containing tagatose as a prebiotic and a specific *Lactobacillus* sp. lactic acid bacterium specifically using tagatose as a probiotic, such that the specific lactic acid bacterium may be dominantly proliferated in the intestine of a host eating the synbiotics.

### Description of Drawings

FIG. 1 shows a growth curve of a *Lactobacillus casei.*
FIG. 2 shows a growth curve of *Lactobacillus casei* Shirota.
FIG. 3 shows a growth curve of a *Lactobacillus casei* DN114001.
FIG. 4 shows a growth curve of *Lactobacillus casei*-01^{®}.
FIG. 5 shows a growth curve of *Lactobacillus rhamnosus.*
FIG. 6 shows a growth curve of *Lactobacillus rhamnosus* GG.
FIG. 7 shows a growth curve of *Pediococcus Pentosaceus.*
FIG. 8 shows a growth curve of *Lactobacillus farciminis.*
FIG. 9 shows a growth curve of *Lactobacillus acidophilus.*

### Best Mode

Hereinafter, the present invention will be described in detail. Since contents that are not described in the present specification may be sufficiently recognized and inferred by those skilled in the art or similar art, a description thereof will be omitted.

According to an aspect of the present invention, there is provided a food composition comprising tagatose and *Lactobacillus casei, wherein* the *Lactobacillus casei* is one or more selected from a group consisting of *Lactobacillus casei* Shirota and *Lactobacillus casei*-01®.

The present description provides a food composition containing tagatose, *Lactobacillus* sp. lactic acid bacteria, raw milk, pectin, and purified water.

The food composition is not particularly limited and may be utilized as various food or food compositions.

The food composition may be utilized preferably as milk products, for example, fermented milk and/or concentrated fermented milk, or the like.

According to a specific embodiment said food composition contains, based on
100 parts by weight of the entire composition,
more than 0 to 20 parts by weight of tagatose; and
more than 0 to 1 part by weight of *Lactobacillus casei.*

According to another specific embodiment, said food composition is a fermented milk composition containing, based on 100 parts by weight of the entire composition,
more than 0 to 20 parts by weight of tagatose;
more than 0 to 1 part by weight of *Lactobacillus casei*;
more than 0 to 10 parts by weight, more preferably, 3 to 5 parts by weight of skim milk powder; and
more than 50 to 99 parts by weight, more preferably, more than 80 to 95 parts by weight of purified water.

According to another aspect of the present invention, there is provided a food composition comprising tagatose and *Lactobacillus rhamnosus GG, wherein* based on 100 parts by weight of the composition, it contains more than 0 to 20 parts by weight of tagatose; and more than 0 to 1 part by weight of *Lactobacillus rhamnosus GG.*

According to a specific embodiment said food composition is a concentrated fermented milk composition containing, based on 100 parts by weight of the entire composition,
more than 0 to 20 parts by weight of tagatose;
more than 0 to 1 part by weight of *Lactobacillus rhamnosus*; 50 to 99 parts by weight, more preferably, 70 to 90 parts by weight of raw milk;
more than 0 to 1 part by weight, more preferably, more than 0 to 0.5 parts by weight of pectin; and
more than 0 to 50 parts by weight, more preferably, 1 to 10 parts by weight of purified water.

The term "raw milk" as used herein, which is used as a term generally recognized in the art, means unprocessed milk produced from cows.

The term "pectin" as used herein, which is used as a term generally recognized in the art, means purified polysaccharide carbohydrates widely distributed in land animals and plants and obtained by aqueous extraction particularly from apples, citrus fruits (lemon, lime, orange, or the like), or the like.

The concentrated fermented milk composition may further contain (mixed) skim milk powder, sugar, fructose, glucose, (concentrated) fruit juice, spice processed product, or the like.

The term "skim milk powder" as used herein, which is used as a term generally recognized in the art, means a resultant obtained by separating and removing a fat component from milk. The skim milk powder used in the present invention may be mixed skim milk powder, wherein the mixed skim milk powder means a product obtained by mixing, for example, grain flour (rice flour, or the like), grain products (wheat flour, or the like), food additives such as cocoa products, whey powder, or the like, with skim milk powder or milk powder in which skim milk powder and cream milk powder are mixed with each other, and processing and powdering the mixture.

The fermented milk composition may further contain glucose, sugar, spice processed products, or the like.

*Lactobacillus* sp. lactic acid bacteria such as *Lactobacillus casei, Lactobacillus rhamnosus, Lactobacillus farciminis,* or *lactobacillus acidophilus* have an excellent capacity to use tagatose as a source of nutrients in a host as compared to other strains, these strains may be efficiently utilized as a probiotic of the synbiotic composition using tagatose as a prebiotic, such that these strains are balanced in the intestinal microflora of the host and particularly, become dominant in the intestine of the host, thereby having a positive effect on the metabolism of the host.

It has been known that among the above-mentioned lactic acid bacteria, particularly, *Lactobacillus casei* and *Lactobacillus rhamnosus,* have beneficial effects on the human body such as various functional effects associated with immunity, an anticancer effect, and the like, in addition to intestinal regulation actions, such that *Lactobacillus casei* and *Lactobacillus rhamnosus* have been commercialized in various products around the world.

The *Lactobacillus casei,* which is a known strain belonging to the lactic acid bacteria, may include *Lactobacillus casei* Shirota, *Lactobacillus casei* DN114001, and *Lactobacillus casei*-01^{®} (Reference: Kazumasa Matsumoto et al., ┌Effects of a Probiotic Fermented Milk Beverage Containing Lactobacillus Casei Strain Shirota on Defecation Frequency, Intestinal Microbiota, and the Intestinal Environment of Healthy Individuals with Soft Stools ┘, Journal of Bioscience and Bioengineering VOL. 110 No.5,547-552, 2010; Chu-Ting Liu et al., ┌Antiproliferative and Anticytotoxic Effects of Cell Fractions and Exopolysaccharides from Lactobacillus Casei 01┘, Mutation Research 721(2011)157-162; Maija Saxelin et al., ┌Probiotic and Other Functional Microbes: from Markets to Mechanisms┘, Current Opinion in Biotechnology 2005, 16:204-211; Antonis Ampatzoglou et al., ┌Influence of Fermentation on the Acid Tolerance and Freeze drying Survival of Lactobacillus Rhamnosus GG┘, Biochemical Engineering Journal, 52(2010) 65-70; or the like).

The *Lactobacillus casei* used in the present invention is one or more selected from a group consisting of *Lactobacillus casei* Shirota and *Lactobacillus casei*-01®.

The *Lactobacillus rhamnosus* used in the present invention is *Lactobacillus rhmnosus* GG.

Hereinafter, the present invention will be described in detail through Examples. However, these Examples are only to illustrate the present invention, and a scope of the present invention is not limited thereto.

### Example 1: Selection of Lactic Acid Bacteria Having Excellent Capacity Using Tagatose

The capacity of using tagatose was evaluated on known lactic acid bacteria (250 commercial strains, 25 strains isolated from humans, and 110 lactic acid bacteria strains isolated from milk products on the market)

### (1) Isolation of Strain

Pure culture solutions (1% culture solution in a stationary-phase in which a cell count of each of the strains is about 10⁸ to 10⁹cfu/ml) of a total of 385 lactic acid bacteria strains were inoculated in selective media, respectively, and cultured in an incubator at 37°C for 18 hours, followed by sub-culturing three times. Then, experiments proceeded at a state in which the viability of the strain was optimal.

### (2) Preparation of Culture Medium

In order to evaluate the capacity to use tagatose of each of the lactic acid bacteria, a minimal medium composed of 5g of peptone, 2.5g of sodium acetate trihydrate, 0.5ml of magnesium sulfate heptahydrate, 0.5ml of manganese sulfate tetrahydrate, 5ml of Tween 80, 1g of diammonium citrate, 1g of dipotassium phosphate, and 480ml of distilled water was used.

After the medium was sterilized at 121°C for 15 minutes and divided into three samples, 20ml of 50% tagatose solution, 20ml of 50% glucose solution, and 20ml of 50% fructooligosaccharide solution (FOS) were added to each of the three samples, thereby preparing liquid media.

### (3) Culturing

1% of each of the lactic acid bacteria strains cultured as described above was inoculated in the prepared medium and cultured in an incubator at 37°C for 24 hours. Thereafter, the absorbance of each of the cultured strains was measured using an ELISA reader, and a cell count was measured through plate culture using a dilution solution, thereby evaluating the capacity of using tagatose.

### Example 2: Identification of Excellent Strain According to the Results in Example 1

19 strains having excellent capacity to use tagatose were selected from each of the lactic acid bacteria cultured in Example 1 and identified by isolating 16s rDNAs thereof.

2ml of a culture solution of each of the cultured lactic acid bacteria was extracted (O.D(600): 0.8 to 1.0) and centrifuged at 13,000 rpm for 1 minute, thereby removing a supernatant. Then, 50µl of a refrigerated pre-buffer (containing 15µl of RNase A) and 3µl of a lysozyme solution were suitably mixed with each other and treated, and a cell pellet was treated with this mixture.

The treated cell pellet was turned over every 5 minutes while being left at 37°C for 15 minutes, thereby performing a reaction. Thereafter, 250µl of a refrigerated G-buffer (containing 210µl RNase A and proteinase K solution) were added thereto and completely mixed therewith.

The resultant was turned over every 5 minutes while being left at 65°C for 15 minutes, thereby performing a reaction. Then, 250µl of a refrigerated binding buffer were added thereto and completely mixed therewith.

Next, after the cell lysate (800ul or less) was loaded onto a column and centrifuged at 13,000 rpm for 1 minute, 500ul of a washing buffer A (containing 21ml of absolute ethanol (EtOH)) was added for washing into the column and centrifuged again at 13,000 rpm for 1 minute.

Thereafter, after removing the solution, a G-spin column was stationed on a new 1.5ml Eppendorf-tube. Then, 50 to 200ul of an elution buffer was directly loaded on a membrane, left at room temperature for 1 minute, and then centrifugation was performed, thereby obtaining gDNA.

After extracting DNA from specimens, an interface sequence between 16S rRNA, 23S rRNA, or 16S rRNA and 23S rRNA, which was common in bacteria, was amplified by a polymerase chain reaction (PCR). Then, after performing the fluorescence terminator sequencing, the DNA was isolated in a sequence gel by electrophoresis, and a base sequence in a nucleotide component was determined using an automated sequencer. Next, the base sequence result was input into a computer and compared with a DNA base sequence according to the strain embedded in the computer, thereby identify the strain.

As a result of selecting 19 strains having the most excellent capacity of using tagatose from the total of 385 strains and isolating and identifying the 16s rDNAs thereof as described above, 9 *Lactobacillus casei* strains, 6 *Lactobacillus rhamnosus* strains, 2 *Pediococcus pentosaceus* strains, a single *Lactobacillus farciminis* strain, and a single *Lactobacillus acidophilus* strain were confirmed.

The selected 19 strains were shown in the following Table 1. As shown in Table 1, among them, *L. casei* Shirota, *L. casei* DN114001, *L. casei*-01, and *L*. *rhamnosus* GG had significantly excellent capacity of using tagatose as compared to the other strains.

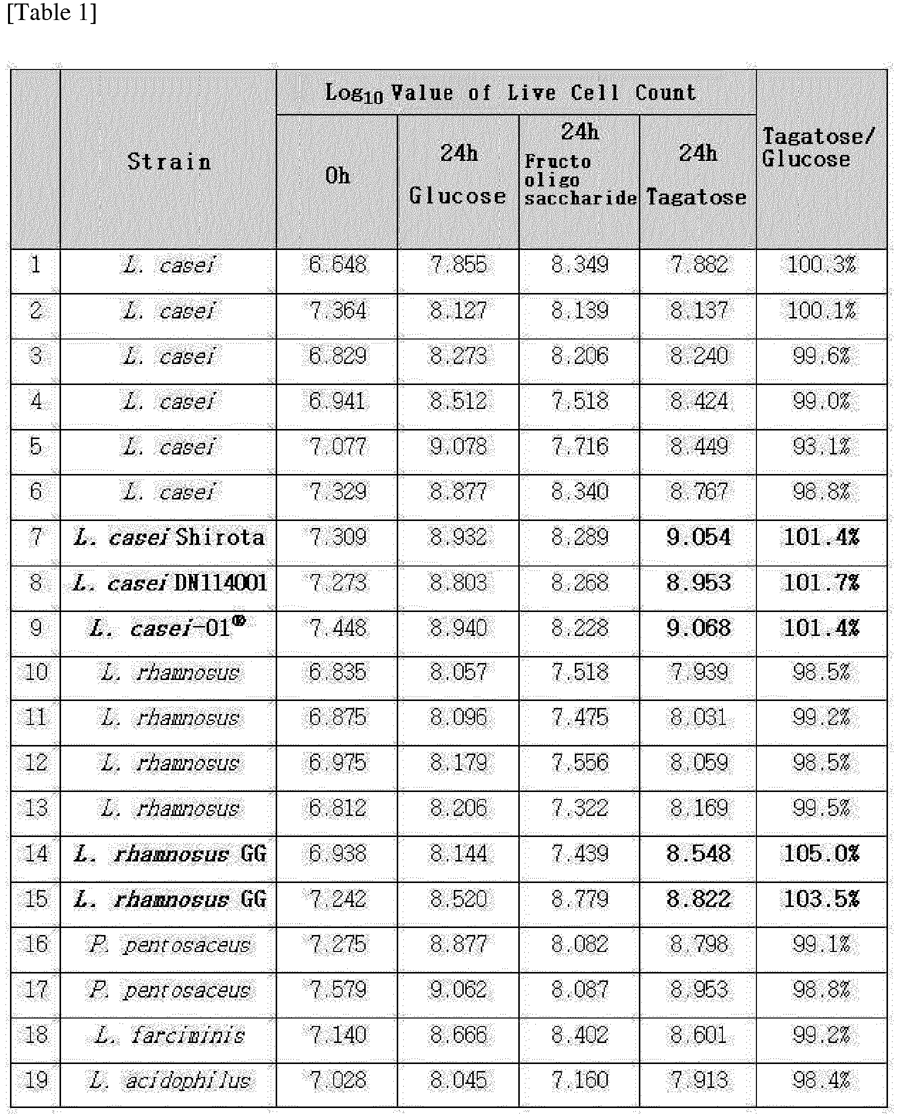

### Example 3: Capacity of Using Other Prebiotics in Some of Lactic Acid Bacteria Identified in Example 2

The capacity of using other prebiotics except for tagatose was evaluated, compared and analyzed using 9 strains having excellent capacity of using tagatose among the 19 strains identified in Example 2.

For the present evaluation, at the time of preparing the medium used in Example 1, as a positive control group, glucose was used except for tagatose, and as negative control groups, fructooligosaccharide, lactitol, lactulose, and xylitol were used.

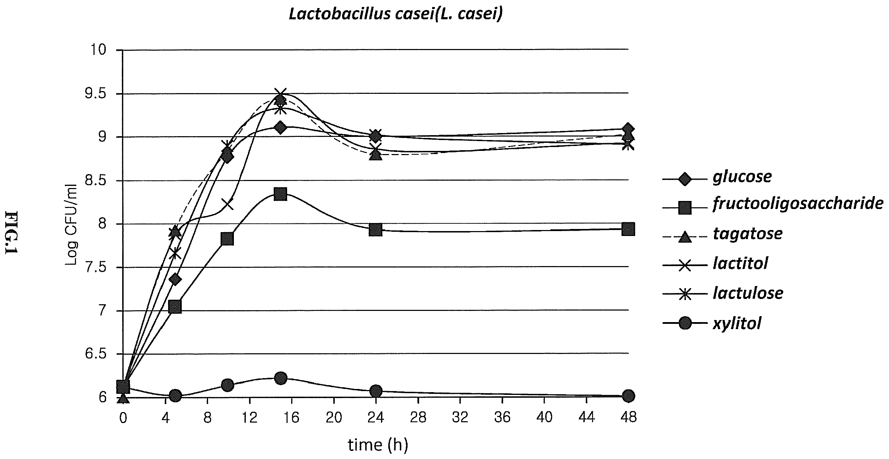

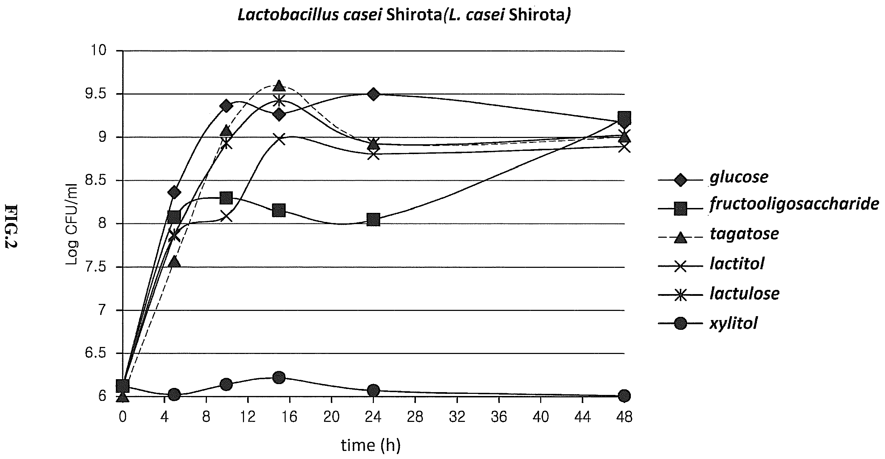

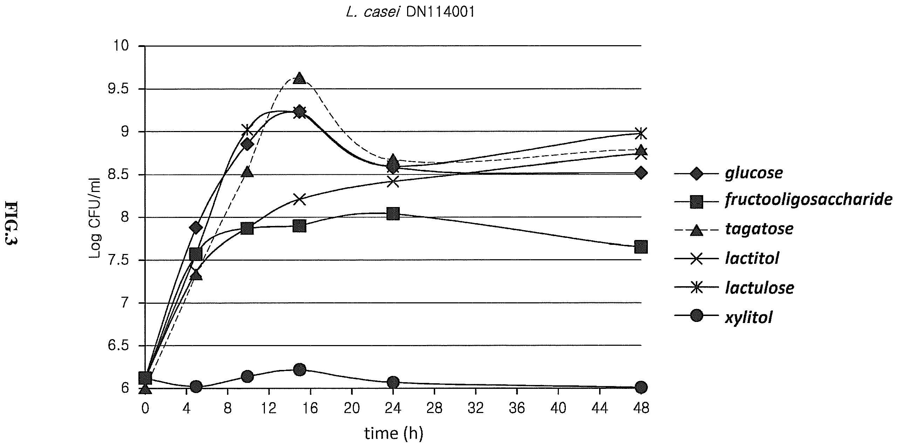

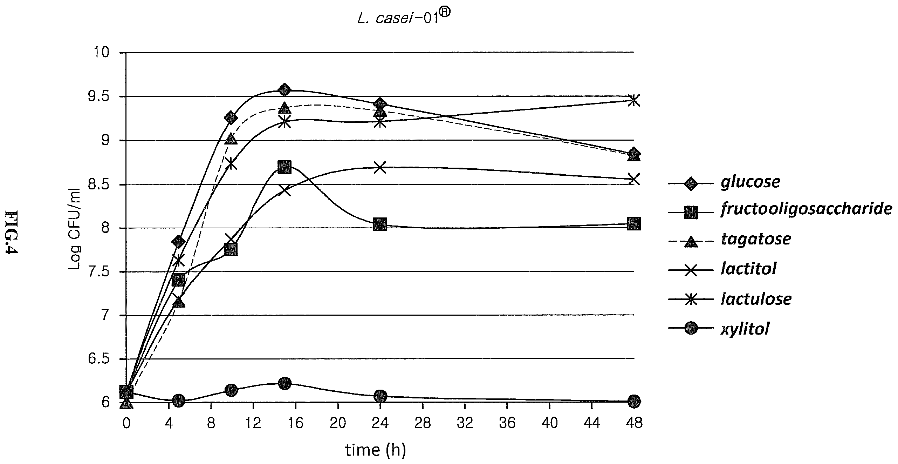

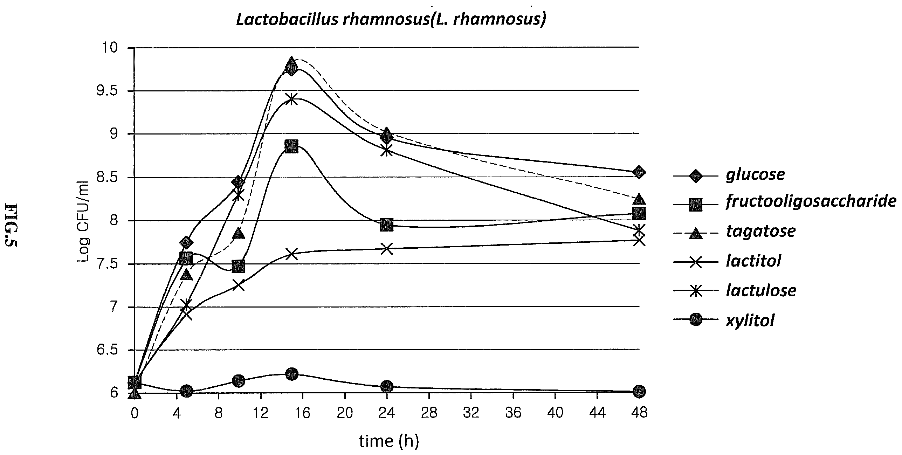

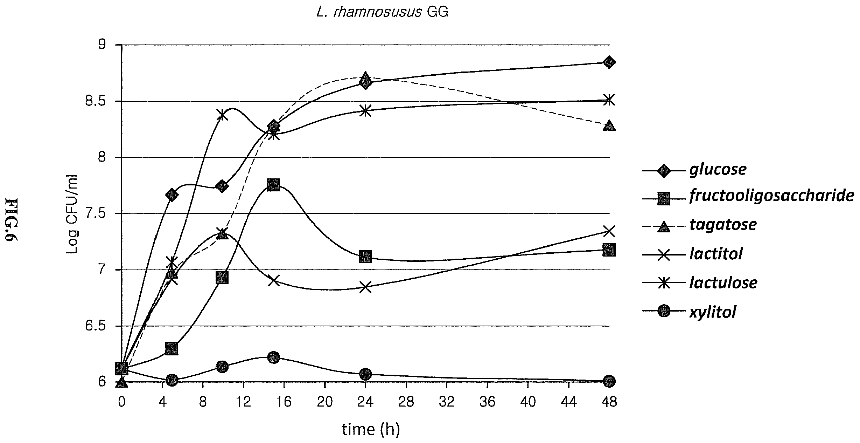

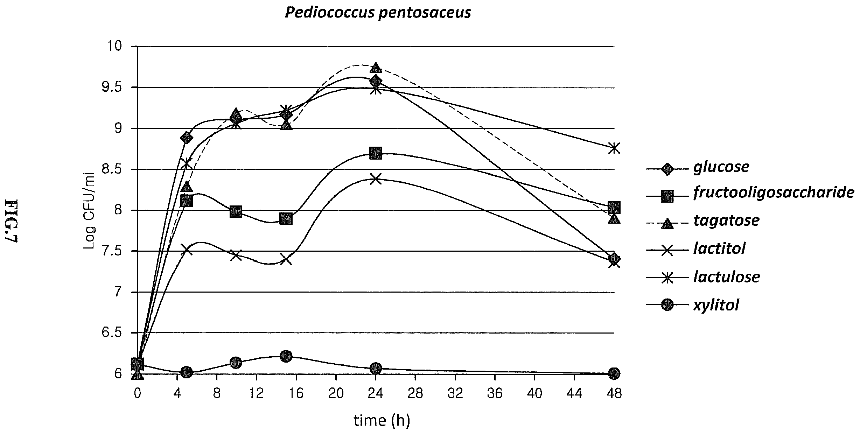

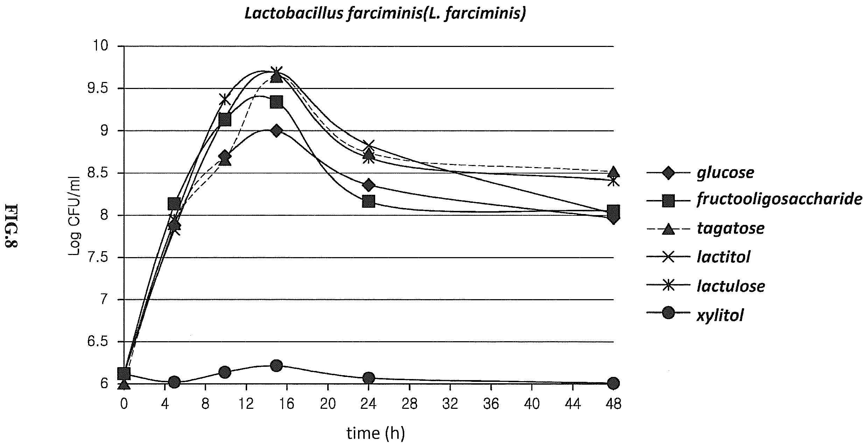

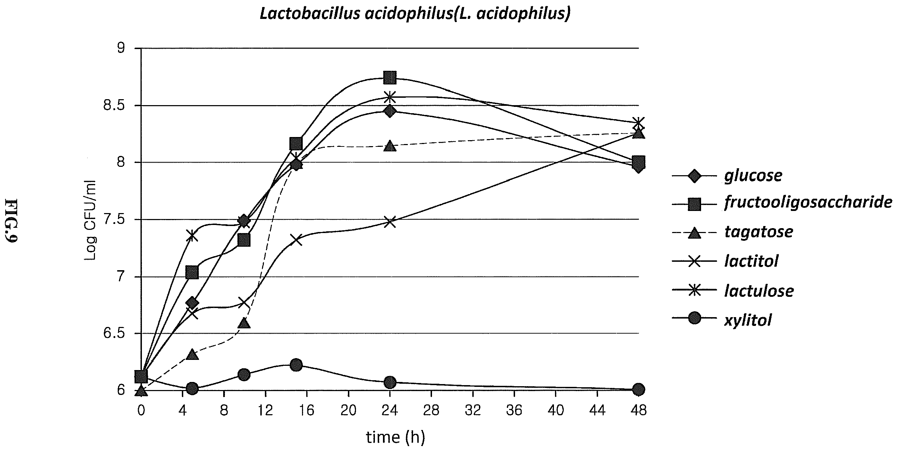

Each of the *Lactobacillus casei* (FIG. 1), *Lactobacillus casei* Shirota (FIG. 2), *Lactobacillus casei* DN114001 (FIG. 3), *Lactobacillus casei*-01^{®} (FIG. 4), *Lactobacillus rhamnosus* (FIG. 5), *Lactobacillus rhamnosus* GG (FIG. 6), *Pediococcus pentosaceus* (FIG. 7), *Lactobacillus farciminis* (FIG. 8), and *Lactobacillus acidophilus* (FIG. 9) that were identified in Example 2 was inoculated in each of the media and cultured at 37°C for 0, 5, 10, 24, and 48 hours. Then, a live cell count thereof was measured, such that a growth curve of each of the strains was obtained.

As a result of comparing the growth curves of the lactic acid bacteria strains efficiently using tagatose, capacity of using glucose, tagatose, and lactulose was similar to each other, but capacity of using fructooligosaccharide and lactitol was low.

### Example 4: Preparation of Synbiotic Concentrated Fermented Milk Composition Containing Tagatose and Lactobacillus rhamnosus (Lactic Acid Bacterium)

In order to prepare a synbiotic concentrated fermented milk (curd fermented milk, drink fermented milk, or the like) composition containing tagatose as a prebiotic and a *Lactobacillus rhamnosus* GG strain as a probiotic, the following method was performed, thereby preparing concentrated fermented milk having a constitution shown in the following Table 2.

First, raw milk and (mixed) skim milk powder were mixed at a mixing ratio, homogenized at a pressure of 150 bar, and passed through a heat exchanger to thereby be sterilized. Then, a temperature was lowered to 40°C, and the *Lactobacillus rhamnosus* GG strain obtained in Example 2 and *Streptococcus thermophilus* were inoculated therein. Next, after fermentation for 6 hours, when a pH became 4.6, curd was cooled while being crushed. At this time, in the case of drink type concentrated fermented milk, homogenization was performed again at a pressure of 150 bar, thereby preparing a culture solution.

Meanwhile, separately, tagatose, white sugar (white sugar may be replaced by fructose or glucose), concentrated strawberry juice or strawberry flesh, pectin, strawberry flavor, and purified water were mixed, sterilized, and cooled, thereby preparing syrup or jam.

The prepared culture solution and syrup or jam were mixed at a predetermined ratio, and then, refrigerated at 10°C or less.

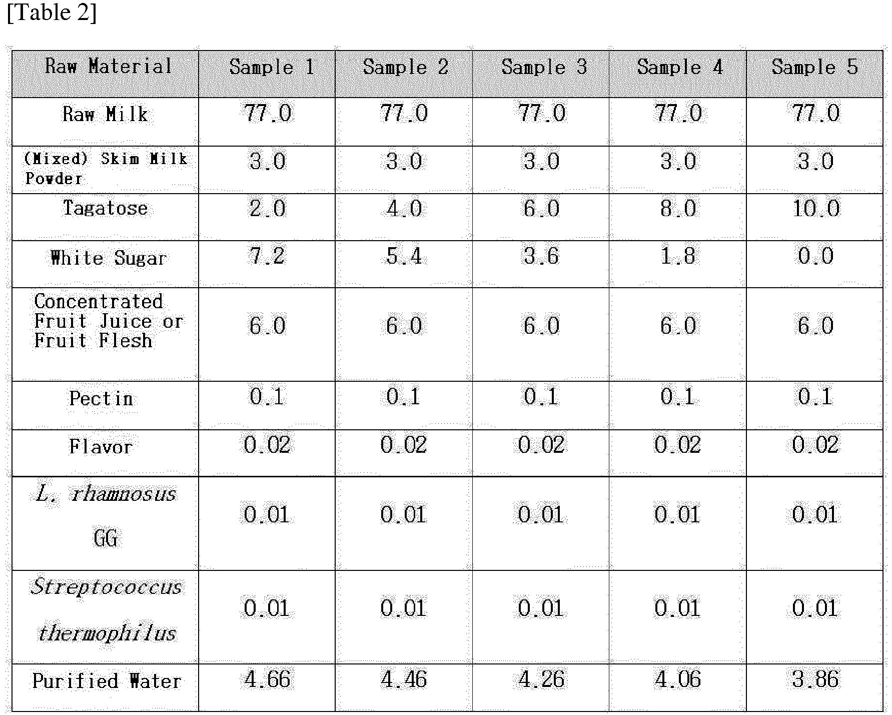

### Example 5: Preparation of Synbiotic Fermented Milk Composition Containing Tagatose and Lactobacillus casei (Lactic Acid Bacterium)

In order to prepare a synbiotic fermented milk (liquid fermented milk, or the like) composition containing tagatose as a prebiotic and a *Lactobacillus casei*-01^{®} strain as a probiotic, the following method was performed, thereby preparing concentrated fermented milk having a constitution shown in the following Table 5.

First, after (mixed) skim milk powder, glucose hydrocrystalline, and purified water were mixed with each other, sterilized at 105°C for 90 minutes, and cooled to 40°C, the *Lactobacillus casei*-01^{®} obtained in Example 2 was inoculated therein. Thereafter, the resultant was fermented for 5 days, and when a pH became 3.6, a temperature was lowered, thereby preparing a culture solution. A constitution of the culture solution was shown in the following Table 3.

Meanwhile, separately, tagatose, white sugar (white sugar may be replaced by fructose), and purified water were mixed, sterilized, and cooled, thereby preparing a syrup. A constitution of the syrup was shown in the following Table 4.

After mixing the prepared culture solution and syrup at a ratio of 1:1, a small amount of yogurt flavor was added while mixing the mixture with purified water again at a ratio of 1:1. Then, the resultant was refrigerated at 10°C or less.

A constitution of the finally prepared fermented milk composition was shown in the following Table 5.

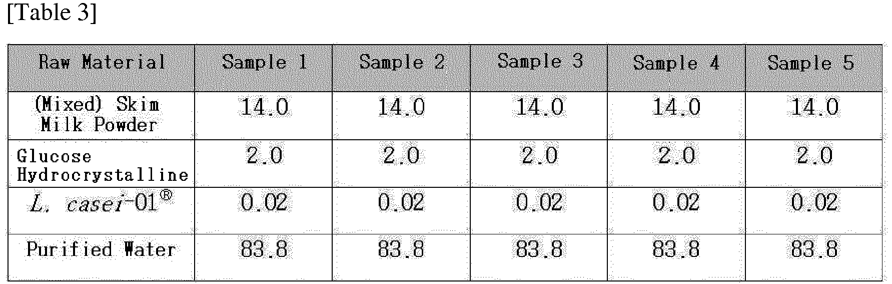

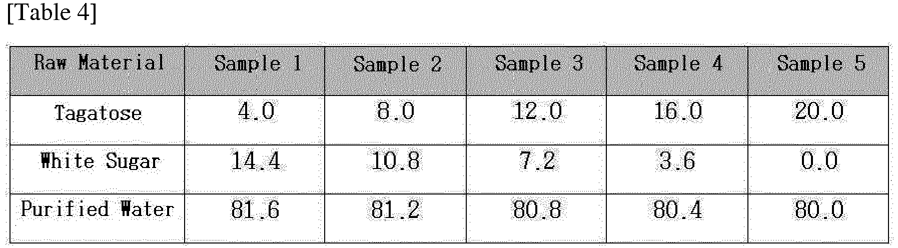

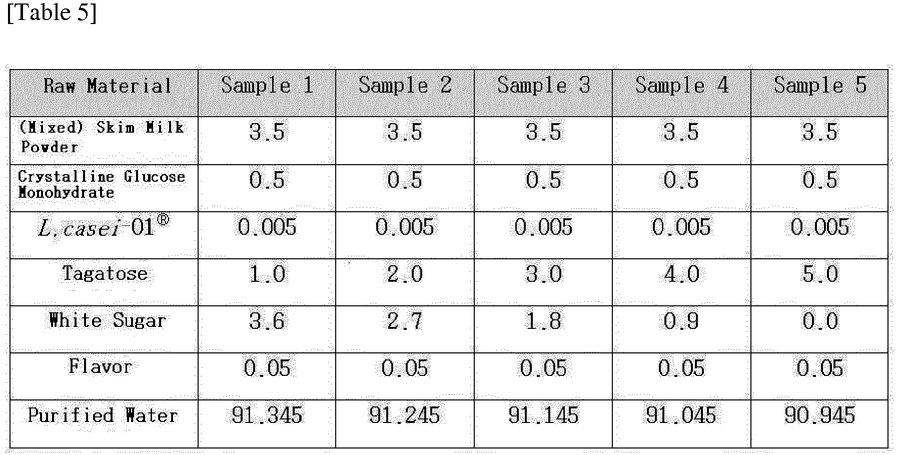

## Claims

1. A food composition comprising tagatose and *Lactobacillus casei, wherein* the *Lactobacillus casei* is one or more selected from a group consisting of *Lactobacillus casei* Shirota and *Lactobacillus casei*-01®.

2. The food composition of claim 1, wherein based on 100 parts by weight of the composition, it contains more than 0 to 20 parts by weight of tagatose; and more than 0 to 1 part by weight of *Lactobacillus casei.*

3. The food composition of claim 1, wherein it is a fermented milk composition containing:
based on 100 parts by weight of the entire composition,
more than 0 to 20 parts by weight of tagatose;
more than 0 to 1 part by weight of *Lactobacillus casei;*
more than 0 to 10 parts by weight of skim milk powder; and
50 to 99 parts by weight of purified water.

4. A food composition comprising tagatose and *Lactobacillus rhamnosus GG, wherein* based on 100 parts by weight of the composition, it contains more than 0 to 20 parts by weight of tagatose; and more than 0 to 1 part by weight of *Lactobacillus rhamnosus GG.*

5. The food composition of claim 4, wherein it is a concentrated fermented milk composition containing:
based on 100 parts by weight of the entire composition,
more than 0 to 20 parts by weight of tagatose;
more than 0 to 1 part by weight of *Lactobacillus rhamnosus;*
50 to 99 parts by weight of raw milk;
more than 0 to 1 part by weight of pectin; and
more than 0 to 50 parts by weight of purified water.

## Patentansprüche

1. Nahrungsmittelzusammensetzung, umfassend Tagatose und *Lactobacillus casei,* wobei das *Lactobacillus casei* ein oder mehr aus der aus *Lactobacillus casei* Shirota und *Lactobacillus case*/-01® bestehenden Gruppe Ausgewähltes ist.

2. Nahrungsmittelzusammensetzung nach Anspruch 1, wobei sie basierend auf 100 Gewichtsanteilen der Zusammensetzung mehr als 0 bis 20 Gewichtsanteile Tagatose und mehr als 0 bis 1 Gewichtsanteile *Lactobacillus casei* enthält.

3. Nahrungsmittelzusammensetzung nach Anspruch 1, wobei sie eine fermentierte Milchzusammensetzung ist, die basierend auf 100 Gewichtsanteilen der gesamten Zusammensetzung enthält:
mehr als 0 bis 20 Gewichtsanteile Tagatose
mehr als 0 bis 1 Gewichtsanteile *Lactobacillus casei,*
mehr als 0 bis 10 Gewichtsanteile Magermilchpulver und
50 bis 99 Gewichtsanteile gereinigtes Wasser.

4. Nahrungsmittelzusammensetzung, umfassend Tagatose und *Lactobacillus rhamnosus* GG, wobei sie basierend auf 100 Gewichtsanteilen der Zusammensetzung mehr als 0 bis 20 Gewichtsanteile Tagatose und mehr als 0 bis 1 Gewichtsanteile *Lactobacillus rhamnosus* GG enthält.

5. Nahrungsmittelzusammensetzung nach Anspruch 4, wobei sie eine konzentrierte fermentierte Milchzusammensetzung ist, die basierend auf 100 Gewichtsanteilen der gesamten Zusammensetzung enthält:
mehr als 0 bis 20 Gewichtsanteile Tagatose
mehr als 0 bis 1 Gewichtsanteile *Lactobacillus rhamnosus*,
50 bis 99 Gewichtsanteile Rohmilch,
mehr als 0 bis 1 Gewichtsanteile Pektin und
mehr als 0 bis 50 Gewichtsanteile gereinigtes Wasser.

## Revendications

1. Composition alimentaire comprenant du tagatose et *Lactobacillus casei,* dans laquelle le *Lactobacillus casei* est un ou plusieurs choisis dans un groupe constitué de *Lactobacillus casei* Shirota et *Lactobacillus casei*-01®*.*

2. Composition alimentaire selon la revendication 1, dans laquelle sur la base de 100 parties en masse de la composition, elle contient plus de 0 à 20 parties en masse de tagatose ; et plus de 0 à 1 partie en masse de *Lactobacillus casei.*

3. Composition alimentaire selon la revendication 1, dans laquelle elle est une composition de lait fermenté contenant :
sur la base de 100 parties en masse de la composition entière,
plus de 0 à 20 parties en masse de tagatose ;
plus de 0 à 1 partie en masse de *Lactobacillus casei* ;
plus de 0 à 10 parties en masse de poudre de lait écrémé ; et
de 50 à 99 parties en masse d'eau purifiée.

4. Composition alimentaire comprenant du tagatose et *Lactobacillus rhamnosus GG,* dans laquelle sur la base de 100 parties en masse de la composition, elle contient plus de 0 à 20 parties en masse de tagatose ; et plus de 0 à 1 partie en masse de *Lactobacillus rhamnosus GG.*

5. Composition alimentaire selon la revendication 4, dans laquelle elle est une composition de lait fermenté concentré contenant :
sur la base de 100 parties en masse de la composition entière,
plus de 0 à 20 parties en masse de tagatose ;
plus de 0 à 1 partie en masse de *Lactobacillus rhamnosus*;
de 50 à 99 parties en masse de lait cru ;
plus de 0 à 1 partie en masse de pectine ; et
plus de 0 à 50 parties en masse d'eau purifiée.
